# EUROPÄISCHE PATENTSCHRIFT

(11) **EP 2 154 587 B1**
(45) Veröffentlichungstag und Bekanntmachung des Hinweises auf die Patenterteilung: **22.01.2014**
(21) Anmeldenummer: 09009491.3
(22) Anmeldetag: 22.07.2009
(51) Int. Cl.: G05B 9/02

(54) **System zum Stellen eines Stellorgans**
System for positioning an actuator
Système de positionnement d'un actionneur

(30) Priorität: 08.08.2008 DE 102008037108
(43) Veröffentlichungstag der Anmeldung: 17.02.2010
(73) Patentinhaber: Samson AG, 60314 Frankfurt (DE)
(72) Erfinder: Karte, Thomas, Dr., 63486 Bruchköbel (DE)
(74) Vertreter: Schmid, Nils T.F.

(56) Entgegenhaltungen:
- DE-A1-102005 004 477
- DE-A1-102005 024 686
- US-A1- 2007 018 127

## Beschreibung

Die Erfindung betrifft ein System zum Stellen eines Stellorgans, wie eines zu regelnden Stellventils, einer verfahrenstechnischen Anlage, wie einer petrochemischen Anlage oder eines Kraftwerks, wie eines Kernkraftwerks.

Bei einer derartigen Anlage ist notwendig, die Strömung eines Prozessfluids in Abhängigkeit von Anlageparametern zu regeln. Einige der dafür vorgesehenen Stellventile haben zusätzlich zu ihrer Regelfunktion, in der sie wenigstens zwei Regelstellungen einnehmen können, auch eine weitere sicherheitsgerichtete Abschaltfunktion, bei der beispielsweise eine vollständiges Schließen des Stellventils veranlasst werden soll. Je nach Sicherheitsbestimmungen der jeweiligen Verfahrenstechnik kann es geboten sein, für das Stellen des Stellventils einen pneumatischen Antrieb zu nutzen. Es sei klar, dass erfindungsgemäß auch hydraulische oder elektrische Antriebe, eingesetzt werden können. Der pneumatische Antrieb eignet sich wegen seines einfachen mechanischen Aufbaus gut für Regelventile mit automatischer Sicherheitsfunktion. Wird der pneumatische Antrieb entlüftet, so sorgen eingebaute Federn für das selbsttätige Anfahren der Sicherheitsstellung. Dieser Aufbau arbeitet mit hoher Zuverlässigkeit.

Es ist bekannt, den pneumatischen Stellantrieb für das steuerbare Stellventil über einen sogenannten Stellungsregler (Digital Valve Controller) mit einem pneumatischen Steuerausgang anzusteuern, der neben analogen und digitalen elektronischen Komponenten insbesondere zum Verarbeiten von Positionssignalen des Stellventils auch einen Strom/Druck-Wandler aufweist, welcher durch Empfang eines elektrischen Signals betätigt wird und den pneumatischen Stellantrieb ansteuert. Der Stellungsregler empfängt über eine übergeordnete Prozessleitstelle, die im englischen Sprachraum "Basic Process Control System" (kurz: BPCS) genannt wird, Stellventil-Stellungssollwertsignal. Die Prozessleitstelle (BPCS) erzeugt über beispielsweise eine manuelle Eingabe einer Bedienperson oder eine Regelungsroutine mit elektronischer Verarbeitung in einer bezüglich des Stellungsreglers übergeordneten Systemebene des mehrerer Prozessparameter das Stellventil-Stellungssollwertsignal und gibt dieses für eine stellorganspezifische Weiterverarbeitung an den dem jeweiligen Stellorgan individuell zugeordneten Stellungsregler ab. Dabei wird üblicherweise von der Prozessleitstelle ein sogenanntes 4 bis 20 mA-Signal an den Stellungsregler gesandt. Diese Prozessleitstelle steuert die Anlage im Normalbetrieb, das heißt, solange keine Störungen vorliegen.

Eine derartige Anordnung bestehend aus einem Stellorgan mit Sicherheitsstellung, einem Stellungsregler, der mit einer dazu separaten Prozessleitstelle verbunden ist, und dem pneumatischen Antrieb wird häufig mit einem Sicherheitssystem für die prozesstechnischen Anlagegekoppelt. Das von der Prozessleitstelle baulich getrennte Sicherheitssystem wird im englischen Sprachgebrauch "Safety Instrument System" (kurz: SIS) genannt. Dieses Sicherheitssystem hat eine sogenannte Sicherheitssteuerung (englisch: "Logic Solver"), eine Art Rechner. Die Sicherheitssteuerung steuert betriebsgemäß ein abzuschaltendes Ventil über eine elektrische Leitung an, indem im Normalbetrieb ein 24 Volt-Signal ausgegeben wird und im Falle einer Notsituation der Anlage es energielos gestellt wird, was einem sogenannten 0-Volt-Signal entspricht. Die Sicherheitssteuerung arbeitet unabhängig und autark von der Prozessleitstelle. Die Sicherheitssteuerung schaltet das betreffende Ventil automatisch ab, ohne dass ein Zutun insbesondere von einer Bedienperson über die Prozessleitstelle notwendig ist. Bei einem gattungsgemäßen Stellorganstellsystem empfängt der Stellungsregler Steuerungs- und/oder Regelvorgaben für den Betrieb des Stellorgans von der Prozessleitstelle BPCS. Abgeschaltet in die Sicherheitsstellung wird durch die Sicherheitssteuerung SIS.

Weiterhin sind in manchen Anlagen noch Vorrichtungen installiert, die eine Überprüfung des Sicherheitssystems gestatten. Bei einer Überprüfung sicherheitsgerichteter Kreise ist es notwendig, den korrekten Signalfluss von der Sicherheitssteuerung zum Ventil nachzuweisen und die korrekte Funktion aller Komponenten zu dokumentieren.

US 2007/0018127 A1 offenbart eine Sicherheitssteuerung mit einem Sicherheitsventil.

Ein bekanntes, gattungsgemäßes System zum Stellen eines Stellventils ist in der beiliegenden Prinzipsskizze gemäß Figur A) dargestellt, bei dem das Stellungsregelungssystem im Allgemeinen mit dem Bezugsbuchstaben a versehen ist. Das bekannte Stellungsregelungssystem a umfasst eine Prozessleitstelle (BPCS) b, die über eine elektrische Leitung **c** an einen Stellungsregler **d** angeschlossen ist. Der Stellungsregler **d** umfasst einen Mikroprozessor (nicht dargestellt), der ankommende Stellungssollwerte der Prozessleitstelle **b** weiterverarbeitet und einem nicht dargestellten internen Strom/Druck-Wandler übergibt, der einen pneumatischen Stellantrieb **e** über eine pneumatische Leitung **l** ansteuert. Der pneumatische Stellantrieb **e** betätigt entsprechend ein Stellventil **f.**

Der Prozessleitstelle (BPCS) **b** ist eine separate, autark arbeitende Sicherheitssteuerung (SIS) **g** nebengeordnet, welche über eine eigene Signalübertragungsleitung **h** mit einem eigenen Strom/Druck-Wandler, nämlich einem Magnetventil **o**, verbunden ist, der auf die pneumatische Steuerleitung **l** zwischen dem Stellungsregler **d** und dem pneumatischen Stellantrieb **e** zugreift. Die Sicherheitssteuerung **g** ist mit dem Stellungsregler über eine Leitung verbunden, über die das oben beschriebene 24-Volt-/0-Volt-Signal dem Magnetventil **o** zugeführt wird. Sollte eine Notsituation in der Anlage auftreten, so erzeugt die Sicherheitssteuerung **g** das 0-Volt-Signal, wodurch dass Magnetventil **o** die pneumatische Verbindung zwischen dem Stellungsregler **d** und dem Antrieb **e** trennt. Dabei wird eine Druckkammer des pneumatischen Antriebs **e** mit Atmosphäre verbunden, was den pneumatischen Antrieb e entlüften lässt. Auch im Falle eines vollständigen Stromausfalls der Anlage fehlt das 24-Volt-Dauerbetriebssignal, und es liegt das 0-Volt-Signal an dem Magnetventil **o** an, wodurch der pneumatische Antrieb **e** ebenfalls entlüftet wird und das Stellventil **f** in die Notposition verbracht wird.

Im Übrigen sei darauf hingewiesen, dass der pneumatische Stellantrieb **e** auch dann entlüftet wird, wenn ein entsprechendes Signal von der Prozessleitstelle **b** über die Signalleitung **c** dem Stellungsregler **d** und dem darin angeordneten Strom/Druck-Wandler zugeführt wird.

Ein Beispiel für ein derartiges, gattungsgemäßes Stellungsregelungssystem ist in US 2006/0219299 A1 und DE 10 2005 004 477 A1 angegeben. Ein Nachteil des bekannten Stellungsreglersystems besteht darin, dass es aufgrund der Vielzahl von Komponenten, welche aus Sicherheitserwägungen durch die Anordnung von Strom/Druck-Wandlern und entsprechende pneumatische Leitungen veranlasst ist, einen komplexen Aufbau aufweist. Als weiterer Nachteil sind die hohen Kosten zu nennen, die insbesondere durch die beiden Verbindungen von Prozessleitstelle bzw. Sicherheitssteuerung zu dem im Feld befindlichen Stellungsregler bzw. Magnetventil verursacht werden. Prozessleitstelle und Sicherheitssteuerung sind in einem sogenannten Leitraum untergebracht, dieser ist oft weit entfernt vom Einbauort der Feldgeräte. Zu den Kosten der elektrischen Verbindungsleitung sind noch die entsprechenden Trennverstärker für Einspeisung der Signale in explosionsgefährdete Gebiete und die Ausgabekarten der jeweiligen Systeme hinzuzurechnen, sowie entsprechende Kosten für Inbetriebnahme, Prüfung und Dokumentation. Ein weiterer Nachteil betrifft die Überprüfung des sicherheitsgerichteten Kreises. Das Stellventil kann nach heutigem Stand der Technik vollständig überprüft werden, eine Überprüfung des Magnetventils ist aber schwierig, da hierbei die Gefahr des unbeabsichtigten Schließens des Stellventils besteht.

Es ist Aufgabe der Erfindung, die Nachteile des Stands der Technik zu überwinden, insbesondere das bekannte, gattungsgemäße System zum Stellen eines Stellorgans, wie eines Stellventils, in einer verfahrenstechnischen Anlage dahingehend zu verbessern, dass deren Aufbau hinsichtlich Kosten und Montage deutlich vereinfacht wird, ohne Einbußen hinsichtlich sowohl der Regelungsfunktion als auch Notschaltfunktion des Systems hinnehmen zu müssen, und eine Überprüfbarkeit aller Komponenten des sicherheitsgerichteten Kreises gewährleistet ist.

Diese Aufgabe wird durch die Merkmale von Anspruch 1 gelöst.

Danach umfasst das System zum Stellen eines Stellorgans, wie eines Stellventils einer verfahrenstechnischen Anlage, das außer dessen wenigstens zwei Regelungsstellungen eine weitere Sicherheitsposition insbesondere in einer Notsituation der Anlage einnehmen soll und durch einen pneumatischen Stellantrieb betätigbar ist, einen mit dem Stellantrieb pneumatisch koppelbaren Stellungsregler zum Steuern des Stellantriebs. Der Stellungsregler ist dem Stellorgan individuell zugeordnet. Des Weiteren umfasst das Stellsystem eine dem Stellungsregler übergeordnete, davon getrennte Prozessleitstelle (BPCS) zum Erzeugen und Abgeben eines Stellorgan-Stellungssollwertsignals, wie eines 4 bis 20 mA-Signals, an den Stellungsregler und eine der Prozessleitstelle nebengeordnete Sicherheitssteuerung (SIS) zum Erzeugen und Abgeben eines Sicherheitssignals, wie eine 0 oder 24 V-Signals. Durch das Sicherheitssignal wird der pneumatische Stellantrieb entlüftet, wodurch das Stellorgan in eine vorbestimmte Sicherheitsposition selbsttätig verfährt. Erfindungsgemäß sind die Prozessleitstelle und die Sicherheitssteuerung derart miteinander signalübertragungsgemäß gekoppelt, dass das Stellorgan-Stellungssollwertsignal über die Sicherheitssteuerung und über eine den Stellungsregler mit der Sicherheitssteuerung elektrisch koppelnde Signalübertragung übertragen wird. Mit der erfindungsgemäßen Maßnahme der Signalübertragung von der Prozessleitstelle hin zum Stellungsregler ausschließlich über die Sicherheitssteuerung wird ein ohnehin bereits vorhandener Signalübertragungsweg verwendet, der beispielsweise als Leitung zwischen der Sicherheitssteuerung und dem Stellungsregler ausgebildet ist. Eine eigene Signalübertragungsleitung von der Prozessleitstelle hin zum Stellungsregler ist entbehrlich. Des Weiteren werden Trennverstärker, Ausgabekarten, pneumatische Schalter sowie ein Magnetventil ausschließlich für die Sicherheitssteuerung oder die Prozessleitstelle eingespart. Bei Diagnoseverfahren für das erfindungsgemäße Stellgerät ist somit eine deutliche Eingrenzung von potentiellen Fehlerquellen realisiert.

Erfindungsgemäß wird in die Kommunikationsleitung zwischen der übergeordneten, separaten Prozessleitstelle (BPCS) und dem Stellungsregler die Sicherheitssteuerung (SIS) eingebunden, so dass die Steuer- und/oder Regelsignale der Prozessleitstelle über dieselbe Leitung an den Stellungsregler übertragen wird, wie auch das Sicherheitssignal der Sicherheitssteuerung.

Im Vergleich zu dem in Figur A dargestellten bekannten Stellsystem wird die Signalübertragungsleitung **h** nicht mehr mit einem eigenen Magnetventil **o** verbunden, sondern direkt mit dem Stellungsregler, der einen eigenen internen Strom/Druck-Wandler hat. Es zeigt sich bei der Erfindung überraschenderweise, dass mit der Kopplung der Sicherheitssteuerung mit dem Stellungsregler ein sicheres Verfahren des Stellorgans in die Sicherheitsposition gewährleistet ist, auch wenn die Sicherheitssteuerung direkt auf den Stellungsregler zugreift, der üblicherweise nur von der Prozessleitstelle angesteuert wird.

Bei einer bevorzugen Ausführung der Erfindung ist die Prozessleitstelle ausschließlich über die Sicherheitssteuerung mit dem Stellungsregler gekoppelt. Insofern ist eine prozessleitstelleneigene Übertragungsleitung, wie sie aus dem Stand der Technik bekannt ist, entbehrlich. Sämtliche Steuerungs- und/oder Regelungssignale werden über die Sicherheitssteuerung und die die Sicherheitssteuerung mit dem Stellungsregler verbindenden Leitung an den Stellungsregler und den dort befindlichen Strom/Druck-Wandler übertragen.

Um gleichzeitig ein Notsignal sowie ein Regelsignal über ein und dieselbe Leitung übertragen zu können, kann beispielsweise das HART-Protokoll verwendet werden.

Vorzugsweise sind die Prozessleitstelle und die Sicherheitssteuerung durch einen BUS miteinander gekoppelt. Hierbei kann beispielsweise das unter der Produktbezeichnung MODBUS RTU bekannte Kommunikationssystem herangezogen werden, was von dem Unternehmen Honeywell und HIMA beworben wird. Bei der sogenannten MODBUS-Kommunikation von Honeywell arbeitet ein PLC-Gateway als MODBUS-Master und eine HIMA-Steuerung als sogenannter MODBUS-Slave. Die MODBUS-Slave-Funktionalität ist generell in dem HIMA-Betriebssystem integriert.

Vorzugsweise ist die Verbindung zwischen der Sicherheitssteuerung und dem Stellungsregler als Drahtverbindung ausgebildet. Als Signal wird vorzugsweise das sogenannte 4-20mA Signal in Zweileitertechnik verwendet. Es sind aber auch andere Signale, wie z.B. eine digitale Verbindung über einen Feldbus möglich.

Die Sicherheitssteuerung ist vorzugsweise mit einer Entscheidungslogik ausgestattet, die die Zustände Normalbetrieb und Störfall unterscheidet. Liegt Normalbetrieb vor, wird ein dem von der Prozessleitstelle empfangenen Stellungsreglersollwert entsprechendes Signal auf die Leitung zum Stellungsregler aufgeschaltet, liegt ein Störfall vor, wird ein Sicherheitssignal zum Entlüften des Stellungsreglers auf die Leitung aufgeschaltet.

Bei der Weiterbildung der Erfindung hat der Stellungsregler für eine Anordnung bestehend aus einem pneumatischen Stellantrieb und einem Stellorgan lediglich einen einzigen Strom/Druck-Wandler, der sowohl ein elektrisches Stellungssignal als auch ein elektrisches Sicherheitssignal von einer Elektronikkomponente des Stellungsreglers empfängt, welche wiederum sowohl das Stellorgan-Stellungssollwertsignal von der Prozessleitstelle als auch das Sicherheitssignal von der Sicherheitssteuerung für das zwangsweise Entlüften des pneumatischen Stellantriebs empfängt.

Bei einer bevorzugten Ausführung der Erfindung hat der intelligente Stellungsregler eine zusätzliche Schaltung, die ein Sicherheitssignal zum Entlüften des pneumatischen Stellantriebs innerhalb des Stellungsreglers erzeugt, wenn der Stellungsregler ein Stellorgan-Stellungssollwertsignal mit einem Strom- oder Spannungswert empfängt, der unterhalb oder oberhalb eines zusatzschaltungsspezifischen Schwellenwerts liegt. Beispielsweise kann der zusatzschaltungsspezifische Schwellenwert bei 4 mA liegen. Erreicht diese Stellungsregler ein Signal mit einer 4 mA-Wertigkeit, schaltet die Schaltung des Stellungsreglers den internen Stromdruck-Wandler um, um den pneumatischen Antrieb zu entlüften.

Vorzugsweise entlüftet ein Strom/Druck-Wandler den pneumatischen Stellantrieb dann, wenn der Stellungsregler ein 4 mA-Signal von der Prozessleitstelle empfängt oder stromlos über die Sicherheitssteuerung gestellt ist. Sowohl das 4mA-Signal als auch die Stromlosstellung (vollständiges Wegschalten der Versorgungsenergie) werden über ein und dieselbe Signalübertragungsleitung kommuniziert.

Vorzugsweise ist die den Stellungsregler mit der Sicherheitssteuerung verbindende Signalübertragung eine Drahtleitung.

Vorzugsweise hat der Stellungsregler einen Sensor, insbesondere einen Positionssensor, der über die Signalübertragung zwischen dem Stellungsregler und der Sicherheitssteuerung mit der Prozessleitstelle kommunizieren kann.

Vorzugsweise ist der Stellungsregler oder die Sicherheitssteuerung oder die Prozessleitstelle mit einer Diagnoselogik ausgestattet. Diese Logik vergleicht, ob das Signal des Positionssensors mit dem Stellungsreglersollwert übereinstimmt. Bei Übereinstimmung kann davon ausgegangen werden, dass die gesamte Signalkette einschließlich des Strom-Druckwandlers einwandfrei arbeitet. Damit ist eine Prognose über die Wahrscheinlichkeit des sicheren Abschaltens im Störfall möglich.

Schließlich betrifft die Erfindung ein Verfahren zum Stellen eines Stellorgans, wie eines Stellventils, einer verfahrenstechnischen Anlage, das außer dessen Regelungsstellung eine weitere Sicherheitsposition insbesondere in einer Notsituation der Anlage einnehmen soll und durch einen pneumatischen Stellantrieb betätigt wird, wobei von einer Prozessleitstelle ein Stellorgan-Stellungssollwertsignal, wie ein 4 bis 20 mA-Signal, erzeugt wird und an einem Stellungsregler abgegeben wird, wobei ein Sicherheitssystem ein Sicherheitssignal, wie ein 0 V oder 24 Volt-Signal, erzeugt und abgibt, um den pneumatischen Stellantrieb zu entlüften und das Stellorgan eine vorbestimmte Sicherheitsposition zu stellen. Das Stellorgan-Stellungssollwertsignal der Prozessleitstelle wird signalübertragungsgemäß über das Sicherheitssystem und über eine den Stellungsregler mit dem Sicherheitssystem elektrisch koppelnden Signalübertragung übertragen.

Vorzugsweise ist das erfindungsgemäße Verfahren gemäß der Funktionsweise des erfindungsgemäßen Stellsystems ausgestaltet ist.

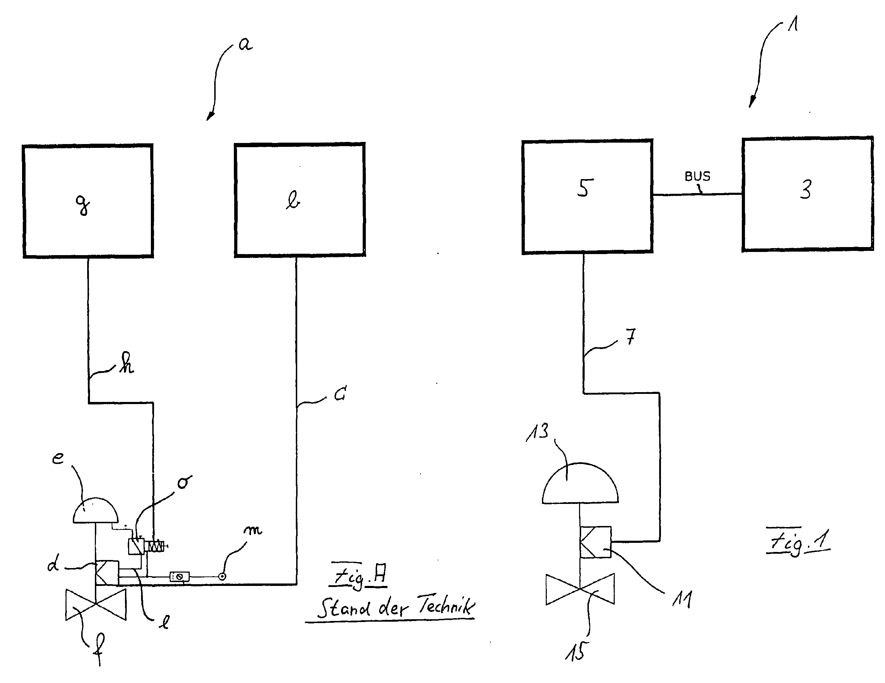

Weitere Eigenschaften, Vorteile und Merkmale der Erfindung werden durch die folgende Beschreibung einer bevorzugten Ausführung der Erfindung anhand der beiliegenden Zeichnung deutlich, in der Figur 1 eine Prinzipskizze des erfindungsgemäßen Systems zum Stellen eines Stellorgans einer verfahrenstechnischen Anlage zeigt.

Das erfindungsgemäße Stellsystem gemäß Figur 1 ist mit der Bezugsziffer 1 versehen. In einer übergeordneten Prozessebene umfasst das Stellsystem eine Prozessleitstelle 3, die für mehrere Stellorgane verantwortlich sein kann, und parallel dazu eine Sicherheitsteuerung 5, die über eine Kommunikationsleitung mit der Prozessleitstelle 3 verbunden ist. Dabei verbindet eine als Kabel ausgeführte Signalübertragungsleitung 7 die Prozessleitstelle 3 über die Sicherheitssteuerung 5 mit einem Stellungsregler 11 des Stellsystems 1.

Der Stellungsregler 11 ist im Detail nicht näher dargestellt, kann aber entsprechend der in DE 10 2005 024 686 A1 beschriebenen Stellungsreglerausführung insbesondere gemäß deren Figur ausgebildet sein. Der Aufbau des Stellungsreglers von DE 10 2005 024 686 A1 soll durch Bezug in die vorliegenden Anmeldeunterlagen als eingearbeitet gelten.

Der Stellungsregler 11 arbeitet nach dem sogenannten Live-Zero-Prinzip, nach dem auch dann der pneumatische Ausgang mit hoher Zuverlässigkeit drucklos geschaltet werden kann, wenn über die Signalübertragungsleitung 7 ein elektrisches Signal bestimmter Größe empfangen wird. Dafür hat der Stellungsregler 11 eine elektrische Zusatzschaltung (nicht dargestellt), welche ein Relais ansteuert, dieses Relais schaltet den Strom/Druck-Wandler in den stromlosen Zustand. Empfängt der Stellungsregler 11 das Live-Zero-Signal (4 mA) von der Prozessstelle 3, wird der Strom/Druck-Wandler durch das Relais stromlos gestellt, wodurch ein pneumatischer Stellantrieb 13 entlüftet wird. Der pneumatische Stellantrieb 13 verfährt das Stellventil 15 aufgrund der Freigabe potentieller Energie vorgespannter Druckfedern des Antriebs 13 selbsttätig in eine vorbestimmte Sicherheitsposition.

Auch wird das Stellventil 15 in die vorbestimmte Sicherheitsposition verfahren, wenn die Sicherheitssteuerung 5 ein Sicherheitssignal in Form eines 0-mA-Signals abgibt. Im Normalbetrieb liegt an dem Ausgang der Sicherheitssteuerung 5 ein dem Sollwert der Ventilstellung entsprechender Wert zwischen 4 und 20 mA an. Kommt es zu einem Stromausfall oder zu einer einen Stromausfall bewirkenden Notsituation der verfahrenstechnischen Anlage, erfährt der Stellungsregler 11 ein "0-mA"-Signal, woraufhin ebenfalls der pneumatische Stellantrieb 13 über den energielos gestellten Strom/Druck-Wandler entlüftet.

Erfindungsgemäß werden sowohl die Steuersignale von der Prozessleitstelle 3 als auch das Sicherheitssignal der Sicherheitssteuerung 5 über ein und dieselbe Übertragungsleitung 7 an nur einen Strom/Druck-Wandler des Stellungsreglers 11 weitergegeben.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Stellsystem
- 3: Prozessleitstelle
- 5: Sicherheitssteuerung
- 7: Signalübertragungsleitung
- 11: Stellungsregler
- 13: pneumatischer Antrieb
- 15: Stellventil

## Patentansprüche

1. System zum Stellen eines Stellorgans, wie eines Stellventils (15), einer verfahrenstechnischen Anlage, das außer dessen Regelungsstellungen eine weitere Sicherheitsposition insbesondere in einer Notsituation der Anlage einnehmen soll und durch einen pneumatischen Stellantrieb (13) betätigbar ist, umfassend: einen mit dem Stellantrieb (13) pneumatisch koppelbaren Stellungsregler (11) zum Steuern des Stellantriebs (13), eine Prozessleitstelle (3) zum Erzeugen und Abgeben eines Stellorgan-Stellungssollwertsignals, wie eines 4 bis 20 mA-Signals, an den Stellungsregler (11) und eine Sicherheitssteuerung (5) zum Erzeugen und Abgeben eines Sicherheitssignals, durch das der Stellantrieb (13) entlüftet wird und dadurch das Stellorgan in eine vorbestimmte Sicherheitsposition selbsttätig verfährt,
**dadurch gekennzeichnet, dass** die Prozessleitstelle (3) und die Sicherheitssteuerung (5) derart miteinander signalübertragungsgemäß gekoppelt sind, dass das Stellorgan-Stellungssollwertsignal über die Sicherheitssteuerung (5) und über eine den Stellungsregler (11) mit der Sicherheitssteuerung (5) elektrisch koppelnde Signalübertragung (7) übertragen wird.

2. System nach Anspruch 1, **dadurch gekennzeichnet, dass** die Prozessleitstelle (3) ausschließlich über die Sicherheitssteuerung (5) mit dem Stellungsregler (11) gekoppelt ist.

3. System nach Anspruch 1 oder 2, **dadurch gekennzeichnet, dass** die Prozessleitstelle (3) und die Sicherheitssteuerung (5) durch einen BUS miteinander gekoppelt sind.

4. System nach eine der vorstehenden Ansprüche, **dadurch gekennzeichnet, dass** der Stellungsregler (11) nur einen Strom/Druck-Wandler aufweist, der sowohl ein elektrisches Stellungssignal als auch ein elektrisches Sicherheitssignal von einer Elektronikkomponente des Stellungsreglers (11) empfängt.

5. System nach einem der vorstehenden Ansprüche, **dadurch gekennzeichnet, dass** der Stellungsregler (11) eine Sicherheitsschaltung aufweist, die auch dann ein Sicherheitssignal zum Entlüften des pneumatischen Stellantriebs (13) innerhalb des Stellungsreglers (11) erzeugt, wenn der Stellungsregler (11) ein Stellorgan-Stellungssollwertsignal mit einem Strom-und/oder Spannungswert empfängt, der unterhalb eines zusatzschaltungsspezifischen Schwellenwerts liegt, wobei insbesondere der zusatzschaltungsspezifische Schwellenwert bei 4 mA liegt.

6. System nach einem der vorstehenden Ansprüche, **dadurch gekennzeichnet, dass** ein Strom/Druck-Wandler den pneumatischen Stellantrieb (13) dann entlüftet, wenn der Stellungsregler (11) ein 4 mA-Signal empfängt und/oder stromlos über die Sicherheitssteuerung (5) gestellt ist.

7. System nach einem der vorstehenden Ansprüche, **dadurch gekennzeichnet, dass** die Signalübertragung eine Drahtleitung (7) ist.

8. System nach Anspruch 7, **dadurch gekennzeichnet, dass** das Signal auf der Drahtleitung ein digitales Signal ist und entsprechend einem Feldbusprotokoll ausgebildet ist.

9. System nach einem der vorstehenden Ansprüche, **dadurch gekennzeichnet, dass** der Stellungsregler (11) einen Positionssensor umfasst, dessen Ausgabesignal über die Signalübertragung und die Sicherheitssteuerung (5) an die Prozessleitstelle (3) kommuniziert werden kann.

10. System nach Anspruch 9, **dadurch gekennzeichnet, dass** eine Logikeinheit durch Vergleich des Positionssensorsignals und des Stellungsreglersollwerts Diagnose-informationen insbesondere über korrekte Funktion des Strom-Druckwandlers erzeugt, wobei die Logikeinheit im Stellungsregler oder in der Sicherheitssteuerung oder in der Prozessleitstelle angeordnet sein kann.

11. Verfahren zum Stellen eines Stellorgans, wie eines Stellventils (15), einer verfahrenstechnischen Anlage, das außer dessen Regelungsstellung eine weitere Sicherheitsposition insbesondere in einer Notsituation der Anlage einnehmen soll und durch einen pneumatischen Stellantrieb (13) betätigt wird, wobei von einer Prozessleitstelle (3) ein Stellorgan-Stellungssollwertsignal, wie ein 4 bis 20 mA-Signal, erzeugt wird und an einen Stellungsregler (11) abgegeben wird, wobei eine Sicherheitssteuerung (5) ein Sicherheitssignal, erzeugt und abgibt, um den pneumatischen Stellantrieb (13) zu entlüften und das Stellorgan einer vorbestimmten Sicherheitsposition zu verfahren, **dadurch gekennzeichnet, dass** das Stellorgan-Stellungssollwertsignal der Prozessleitstelle (3) signalübertragungsgemäß über die Sicherheitssteuerung (5) und über eine den Stellungsregler (11) mit der Sicherheitssteuerung (5) elektrisch koppelnden Signalübertragung (7) übertragen wird.

## Claims

1. System for positioning an actuator, such as an actuating valve (15), of a process control plant, which in addition to its control positions is designed to take up a further safety position in particular in an emergency situation of the plant, and can be activated by a pneumatic positioning drive (13), comprising: a positioner (11) which can be pneumatically coupled to the positioning drive (13) to control the positioning drive (13), a process control station (3) for producing and outputting an actuator reference position signal, such as a 4 to 20 mA signal, to the positioner (11), and a safety controller (5) for producing and outputting a safety signal, by means of which the actuator (13) is vented and the actuator thereby automatically moves into a predetermined safety position,
**characterized in that** the process control station (3) and the safety controller (5) are coupled together in a signal transmission sense in such a manner that the actuator reference position signal is transmitted via the safety controller (5) and via a signal transmission means (7) that electrically couples the positioner (11) with the safety controller (5).

2. The system according to Claim 1, **characterized in that** the process control station (3) is coupled to the positioner (11) exclusively via the safety controller (5).

3. The system according to Claim 1 or 2, **characterized in that** the process control station (3) and the safety controller (5) are coupled together by a BUS.

4. The system according to any one of the previous claims, **characterized in that** the positioner (11) has only one current/pressure transducer, which receives both an electrical position signal and an electrical safety signal from an electronics component of the positioner (11).

5. The system according to according to any one of the previous claims, **characterized in that** the positioner (11) has a safety circuit which generates a safety signal for venting the pneumatic positioning drive (13) within the positioner (11) also when the positioner (11) receives an actuator reference position signal with a current and/or voltage value which lies below a threshold value specific to an additional circuit, wherein, in particular, the additional circuit specific threshold value is 4 mA.

6. The system according to according to any one of the previous claims, **characterized in that** a current/pressure transducer vents the pneumatic positioning drive (13) when the positioner (11) receives a 4 mA signal and/or is de-energized via the safety controller (5).

7. The system according to any one of the preceding claims, **characterized in that** the signal transmission means is a wire conductor (7).

8. The system according to Claim 7, **characterized in that** the signal on the wire conductor is a digital signal and structured according to a field-bus protocol.

9. The system according to any one of the previous claims, **characterized in that** the positioner (11) comprises a position sensor, the output signal of which can be communicated to the process control station (3) via the signal transmission means and the safety controller (5).

10. The system according to Claim 9, **characterized in that** by comparing the position sensor signal and the positioner reference position, a logic unit generates diagnostic information in particular on the correct operation of the current-pressure transducer, wherein the logic unit can be arranged in the positioner or in the safety controller or in the process control station.

11. Method for positioning an actuator, such as an actuating valve (15), of a process control plant, which in addition to its control positions is designed to take up a further safety position in particular in an emergency situation of the plant, and is activated by a pneumatic positioning drive (13), wherein an actuator reference position signal, such as a 4 to 20 mA signal, is produced by a process control station (3) and is output to a positioner (11), wherein a safety controller (5) produces and outputs a security signal in order to vent the pneumatic actuator (13) and to move the actuator to a predetermined safety position, **characterized in that** the actuator reference position signal of the process control station (3) is transmitted in a signal transmission sense via the safety controller (5) and via a signal transmission means (7) that electrically couples the positioner (11) to the safety controller (5).

## Revendications

1. Système pour positionner un actionneur, comme une vanne de régulation (15), d'une installation technique de processus qui en dehors de ses positions de réglage doit adopter une autre position de sécurité en particulier dans une situation d'urgence d'une installation et peut être actionné par un mécanisme de commande (13), comprenant: un régulateur de position (11) pneumatiquement couplable avec le mécanisme de commande (13) pour piloter le mécanisme de commande (13), un poste de contrôle de processus (3) pour produire et émettre un signal théorique de position d'actionneur, comme un signal de 4 à 20 mA, au régulateur de position (11) et une commande de sécurité (5) pour produire et émettre un signal de sécurité, au moyen duquel le mécanisme de commande (13) est purgée et l'actionneur est de ce fait automatiquement déplacé dans une position de sécurité préalablement définie,
**caractérisé en ce que** le poste de contrôle de processus (3) et la commande de sécurité (5) sont accouplés l'un à l'autre conformément au transfert de signal de telle sorte que le signal théorique de position d'actionneur est transmis par la commande de sécurité (5) et par une transmission de signal (7) accouplant électriquement le régulateur de position (11) à la commande de sécurité (5).

2. Système selon la revendication 1, **caractérisé en ce que** le poste de contrôle de processus (3) est accouplé exclusivement par la commande de sécurité (5) au régulateur de position (11).

3. Système selon la revendication 1 ou 2, **caractérisé en ce que** le poste de contrôle de processus (3) et la commande de sécurité (5) sont couplés l'un à l'autre au moyen d'un bus.

4. Système selon une quelconque des revendications précédentes, **caractérisé en ce que** le régulateur de position (11) ne présente qu'un convertisseur courant/pression qui reçoit aussi bien un signal de position électrique qu'un signal de sécurité électrique d'un composant électronique du régulateur de position (11).

5. Système selon une quelconque des revendications précédentes, **caractérisé en ce que** le régulateur de position (11) présente un circuit de sécurité qui produit également un signal de sécurité pour purger le mécanisme de commande (13) pneumatique à l'intérieur du régulateur de position (11) lorsque le régulateur de position (11) reçoit un signal théorique de position d'actionneur avec une valeur de courant et/ou de tension qui se situe en-dessous d'une valeur seuil spécifique au circuit complémentaire, la valeur seuil spécifique au circuit complémentaire se situant en particulier à 4 mA.

6. Système selon une quelconque des revendications précédentes, **caractérisé en ce qu'**un convertisseur courant/pression purge ensuite le mécanisme de commande (13) pneumatique lorsque le régulateur de position (11) reçoit un signal de 4 mA et/ou est réglé hors tension par la commande de sécurité (5).

7. Système selon une quelconque des revendications précédentes, **caractérisé en ce que** la transmission de signal est un conducteur (7).

8. Système selon la revendication 7, **caractérisé en ce que** le signal sur le conducteur est un signal numérique et est constitué conformément à un protocole de bus sur site.

9. Système selon une quelconque des revendications précédentes, **caractérisé en ce que** le régulateur de position (11) comprend un capteur de position dont le signal de sortie peut être communiqué par la transmission de signal et la commande de sécurité (5) au poste de contrôle de processus (3).

10. Système selon la revendication 9, **caractérisé en ce qu'**une unité logique produit des informations de diagnostic en particulier sur le fonctionnement correct du convertisseur courant-pression par comparaison du signal du capteur de position et de la valeur théorique du régulateur de position, l'unité logique pouvant être disposée dans le régulateur de position ou dans la commande de sécurité ou dans le poste de contrôle de processus.

11. Procédé pour positionner un actionneur, comme une vanne de régulation (15), d'une installation technique de processus qui en dehors de ses positions de réglage doit adopter une autre position de sécurité en particulier dans une situation d'urgence d'une installation et peut être actionné par un mécanisme de commande (13), pour lequel un poste de contrôle de processus (3) produit un signal théorique de position d'actionneur, comme un signal de 4 à 20 mA, et le délivre à un régulateur de position (11), pour lequel une commande de sécurité (5) produit et émet un signal de sécurité pour purger le mécanisme de commande (13) pneumatique et déplacer l'actionneur d'une position de sécurité préalablement définie, **caractérisé en ce que** le signal théorique de position d'actionneur du poste de contrôle de processus (3) est transmis conformément à la transmission de signal par la commande de sécurité (5) et par une transmission de signal (7) accouplant électriquement le régulateur de position (11) à la commande de sécurité (5).
